# EUROPÄISCHE PATENTSCHRIFT

(11) **EP 1 520 184 B1**
(45) Veröffentlichungstag und Bekanntmachung des Hinweises auf die Patenterteilung: **20.06.2007**
(21) Anmeldenummer: 03761397.3
(22) Anmeldetag: 04.04.2003
(51) Int. Cl.: G01S 7/40, G01S 7/497, G01S 7/52

(54) **VERFAHREN UND VORRICHTUNG ZUR KALIBRIERUNG VON SENSOREN IM KRAFTFAHRZEUG**
METHOD AND DEVICE FOR CALIBRATING SENSORS IN A MOTOR VEHICLE
PROCEDE ET DISPOSITIF D'ETALONNAGE DE CAPTEURS DANS UN VEHICULE AUTOMOBILE

(30) Priorität: 29.06.2002 DE 10229334
(43) Veröffentlichungstag der Anmeldung: 06.04.2005
(73) Patentinhaber: ROBERT BOSCH GMBH, 70442 Stuttgart (DE)
(72) Erfinder: FOCKE, Thomas, 31180 Ahrbergen (DE); NIEHSEN, Wolfgang, 31162 Bad Salzdetfurth (DE); MUSTAKLEM, Jeries, 31134 Hildesheim (DE); SUHLING, Frank, 30449 Hannover (DE); MUELLER, Mario, 30173 Hannover (DE)
(86) Internationale Anmeldenummer: PCT/DE2003/001111
(87) Internationale Veröffentlichungsnummer: WO 2004/003586

(56) Entgegenhaltungen:
- EP-A- 0 275 430
- EP-A- 1 134 549
- WO-A-98/38691
- DE-A- 10 049 684
- US-A- 3 806 943

## Beschreibung

### Stand der Technik

In Kraftfahrzeugen ist an den Einsatz einer Vielzahl an Sensoren zur Erfassung des Fahrzeugumfeldes gedacht. Dabei ist vorzugsweise der Einsatz von Bildsensorsystemen, Infrarotsensoren, Ultraschallsensoren und Radarsensoren geplant. Beispielsweise werden Radarsensoren zur Erfassung des Fahrzeugumfeldes in Fahrtrichtung verwendet. Damit ist eine Geschwindigkeitsregelung des Kraftfahrzeugs möglich, bei der die Fahrgeschwindigkeit an langsamer fahrende Fahrzeuge angepasst wird, wenn diese vom Radarsensor im Kursbereich des Kraftfahrzeugs erfasst werden.

Für eine einwandfreie Funktion der Sensoren ist deren Ausrichtung in bezug auf das Kraftfahrzeug und das Fahrzeugumfeld notwendig. Die Sensoren werden dazu nach dem Einbau in das Kraftfahrzeug in einer laborähnlichen Umgebung kalibriert. Beispielsweise ist aus der deutschen Patentschrift DE 197 07 590 C2 ein Verfahren zur Ausrichtung der Strahlcharakteristik eines Radarsensors bekannt. Zur Kalibrierung wird ein Kalibrierobjekt verwendet, das Bezugmerkmale zur Ermittlung der Kalibrierdaten aufweist. Hinweise auf die Kalibrierung weiterer Sensoren fehlen hier.

Aus der Europäischen Patentanmeldung EP 0 275 430 A2 ist eine Vorrichtung zur Darstellung von Radarzielen bei der labormässigen Untersuchung von Radarsuchern bekannt, wobei ein Hohlkörper verwendet wird, der zwei Radarsender und einen Infrarotstrahler aufweist.

### Vorteile der Erfindung

Das nachfolgend beschriebene Verfahren hat den Vorteil, dass durch die Verwendung eines gemeinsamen Kalibrierobjektes für verschiedene Sensortypen die Sensoren an einem Koordinatensystem ausgerichtet werden. Damit können die Daten der so kalibrierten Sensoren gemeinsam verwendet werden, ohne dass es zu Abweichungen der Messungen kommt. Insbesondere ist dies bei Verwendung eines Radarsensors und eines Bildsensorsystems vorteilhaft. Beispielsweise können die Daten, die ein Radarsensor über ein vorausfahrendes Kraftfahrzeug ermittelt, mit den Daten des Bildsensorsystems kombiniert werden, das dasselbe Fahrzeug als Bildobjekt identifiziert hat. Dies kann zur redundanten, fehlerreduzierenden Auswertung der Daten der beiden Sensoren benutzt werden.

In vorteilhafter Weise verringert sich durch das vorgeschlagene Verfahren und die Vorrichtung der Zeit- und Arbeitsaufwand zur Kalibrierung von Sensoren, die sich beispielsweise in einem Kraftfahrzeug befinden. Vorzugsweise kann während der Produktion oder bei einem Werkstattaufenthalt eines Kraftfahrzeuges nach der Montage eines Radarsensors und eines Bildsensorsystems die Kalibrierung in einem Arbeitsschritt durchgeführt werden. Durch Verwendung eines einzigen Kalibrierobjektes kann in vorteilhafter Weise die Bestimmung der Kalibrierdaten der beiden Sensoren zeitgleich erfolgen, d.h. die Ermittlung der Kalibrierdaten erfolgt in engem zeitlichen Zusammenhang in einem Arbeitsschritt. Dies führt zu einer Verminderung des Zeitaufwandes bei der Kalibrierung von Sensoren bei der Produktion oder der Reparatur eines Kraftfahrzeuges. Damit ist eine Verminderung der Produktions- oder Reparaturkosten verbunden.

In vorteilhafter Weise werden die Kalibrierdaten vorzugsweise durch nachfolgende Systeme weiterverwendet. Die Kalibrierdaten können gespeichert und/oder ausgewertet und/oder angezeigt und/oder übertragen und/oder weiterverarbeitet werden. Weiterhin können die Sensoren die Kalibrierdaten in vorteilhafter Weise selbst weiterverwenden. Beispielsweise können bei einem Radarsensor die Kalibrierdaten zur Korrektur der Abweichung der Sensorachse gegenüber der Richtung der Fahrzeuglängsachse eingesetzt werden. Bei einem Bildsensorsystem können die Kalibrierdaten zur automatischen Korrektur der Bilddaten verwendet werden. Als Kalibrierdaten werden dabei die extrinsischen Parameter, vorzugsweise die geometrische Einbauposition und/oder die Richtung der Sensorachse, und/oder intrinsische Parameter, vorzugsweise der Kamerahauptpunkt und/oder die Kamerakonstante und/oder die Verzeichnung, ermittelt.

In besonders vorteilhafter Weise kann zur Kalibrierung eines Sensors wenigstens ein weiterer Sensor als Referenz verwendet werden. Die Kalibrierdaten des Sensors werden aus den Daten des erfassten Kalibrierobjektes und zusätzlich aus den Messdaten wenigstens eines weiteren Sensors gebildet, wobei dieser Referenzsensor das selbe Kalibierobjekt verwendet. Bei einem Kraftfahrzeug mit Radarsensor und Bildsensorsystem können beispielsweise die Daten des Bildsensorsystems als Referenz für die Bestimmung der Kalibrierdaten des Radarsensors verwendet werden. In besonders vorteilhafter Weise können beispielsweise bei einer Reparatur des Radarsensors, wobei eine Nachkalibrierung erforderlich ist, die Kalibrierdaten des Radarsensors aus den Messdaten des Bildsensorsystems und den Daten des durch den Radarsensor erfassten Kalibrierobjektes gebildet werden. Dies führt in vorteilhafter Weise zu einer Erhöhung der Messgenauigkeit des Radarsensors.

Besonders vorteilhaft ist die Verwendung eines einzigen Kalibrierobjektes, das für die wenigstens zwei Sensoren für jeden Sensor wenigstens ein Bezugmerkmal aufweist, wobei die wenigstens zwei Sensoren von unterschiedlichem Sensortyp sind. Durch die Zusammenfassung der Bezugmerkmale zu einem Kalibrierobjekt zur Kalibrierung von wenigstens zwei Sensoren von unterschiedlichem Sensortyp wird die Kalibrierung beispielsweise in der Fertigung eines Kraftfahrzeuges wesentlich erleichtert, weil das Kraftfahrzeug nur noch zu einem Kalibrierobjekt ausgerichtet werden muss.

Daneben bietet die Zusammenfassung der Bezugmerkmale zu einem Kalibrierobjekt den Vorteil, dass das Kalibrierobjekt so gestaltet sein kann, dass die räumliche Lage der Bezugmerkmale zueinander bekannt ist. Dies bildet in vorteilhafter Weise die Grundlage zur Verwendung von Messdaten eines Sensors als Referenz für einen anderen Sensor.

In vorteilhafter Weise wird als Bezugmerkmal für den Radarsensor ein Triple-Spiegel verwendet. Triple-Spiegel zeichnen sich durch drei zueinander senkrechten Reflexionsflächen aus, die eine parallele Rückstrahlung des einfallenden Radarstrahles ermöglichen, wobei der Radarstrahl in einem weiten Winkelbereich bezogen auf die Reflexionsflächen parallel zum einfallendem Strahl reflektiert wird.

In einer Variante des Kalibrierobjektes sind Eichmarken am Triple-Spiegel angebracht. Dies ermöglicht in vorteilhafter Weise die Verwendung des Triple-Spiegels als Bezugmerkmal für den Radarsensor und das Bildsensorsystem. Durch die Verwendung dieser Vorrichtung werden keine weiteren Bezugmerkmale für das Bildsensorsystem benötigt. Darüber hinaus ist durch diese Anordnung die räumliche Lage der Bezugmerkmale für den Radarsensor und das Bildsensorsystem bekannt. Damit kann sowohl der Radarsensor für das Bildsensorsystem als auch das Bildsensorsystem für den Radarsensor als Referenz verwendet werden.

Weitere Vorteile ergeben sich aus der nachfolgenden Beschreibung von Ausführungsbeispielen mit Bezug auf die Figuren und aus den abhängigen Patentansprüchen.

### Zeichnung

Die Erfindung wird nachstehend anhand der in der Zeichnung dargestellten Ausführungsformen näher erläutert.

### Es zeigen:

- Figur 1 eine Übersichtzeichnung der Vorrichtung zur Kalibrierung von Sensoren im Kraftfahrzeug, anhand derer auch das Verfahren beschrieben ist,
- Figur 2 ein Flussdiagramm des Verfahrens zur Kalibrierung von Sensoren,
- Figur 3 ein Blockdiagramm der Vorrichtung zur Kalibrierung von Sensoren.

### Beschreibung von Ausführungsbeispielen

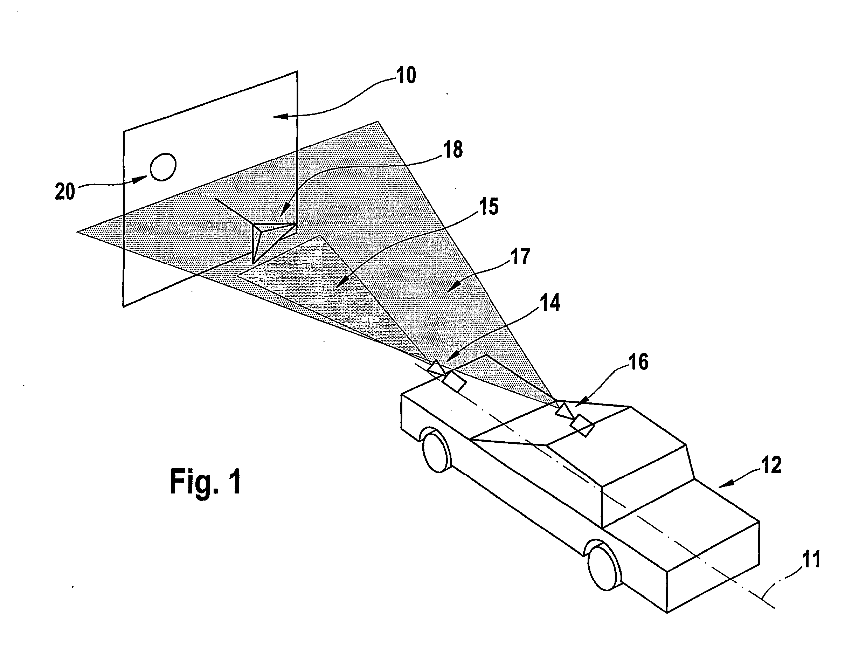

Figur 1 zeigt in einer Übersichtzeichnung ein bevorzugtes Ausführungsbeispiel zur Kalibrierung von Sensoren 14, 16. Am und/oder in einem Kraftfahrzeug 12 befindet sich jeweils ein Radarsensor 14, der vorzugsweise an der Stoßstange angebracht ist, und ein Bildsensorsystem 16, das sich vorzugsweise im Fahrzeuginneren befindet. Beide Sensoren 14, 16 haben einen Erfassungsbereich 15, 17, der jeweils in Richtung der Fahrzeuglängsachse 11 in Fahrtrichtung des Kraftfahrzeuges 12 ausgerichtet ist. Die Richtung der Erfassungsbereiche 15, 17 wird im bevorzugten Ausführungsbeispiel durch die Sensorachsen festgelegt. Beim Radarsensor 14 legt die Richtung der maximalen Empfindlichkeit des Radarsensors 14 die Sensorachse fest, während beim Bildsensorsystem 16 die optische Achse die Sensorachse ist. Im bevorzugten Ausführungsbeispiel überlappt sich der Erfassungsbereich 15 des Radarsensors 14 mit dem Erfassungsbereich 17 des Bildsensorsystems 16. Das Bildsensorsystem 16 besteht im bevorzugten Ausführungsbeispiel aus einem Bildsensor, der beispielsweise in CMOS- oder CCD-Technik ausgeführt ist. Das Kraftfahrzeug 12 ist vor einem Kalibrierobjekt 10 so ausgerichtet, dass der Radarsensor 14 und das Bildsensorsystem 16 die Bezugmerkmale 18, 20 auf dem Kalibrierobjekt 10 erfassen. Im bevorzugten Ausführungsbeispiel genügt es dabei, dass der Radarsensor 14 das Bezugmerkmal 18 und das Bildsensorsystem 16 das Bezugmerkmal 20 erfasst. Das Kalibrierobjekt 10 ist dabei eine flächige oder räumliche Anordnung von Bezugmerkmalen 18, 20, die durch eine mechanische Halterung verbunden sind. Im bevorzugten Ausführungsbeispiel sind die beiden Bezugmerkmale 18, 20 an einer ebenen Wand befestigt, die als Halterung dient. Die Bezugmerkmale 18, 20 sind so gestaltet, dass sie jeweils von dem Radarsensor 14 und dem Bildsensorsystem 16 erfassbar sind. Das Bezugmerkmal 18, das durch den Radarsensor 14 detektiert wird, besitzt charakteristische Eigenschaften. Der Radarsensor 14 ist im bevorzugten Ausführungsbeispiel ein Radarempfänger, der mit einem Sender für Radarstrahlung kombiniert ist. Das Bezugmerkmal 18 muss so beschaffen sein, dass es den einfallenden Radarstrahl zum Radarsensor 14 hin zurückreflektiert. Im bevorzugten Ausführungsbeispiel handelt es sich um einen Triple-Spiegel. Das Bezugmerkmal 20, das durch das Bildsensorsystem 16 detektiert wird, weist hat ebenfalls besondere Eigenschaften auf. Vorzugsweise hat das Bezugmerkmal 20 einen großen Kontrast und/oder eine reflektierende Oberfläche und/oder es weist eine besondere Form auf, wie beispielsweise eine Kreis- oder Quadratform. Zur Kalibrierung des Bildsensorsystems 16 sind ein bis beliebig viele Bezugmerkmale 20 notwendig, wobei bevorzugt zwischen zehn und 50 Bezugmerkmale 20 verwendet werden. Im bevorzugten Ausführungsbeispiel werden beispielsweise 40 Bezugmerkmale 20 zur Ermittlung der Kalibrierdaten des Bildsensorsystems 16 eingesetzt, wobei deren räumliche Lage bekannt ist. Dies ermöglicht die redundante Bestimmung der Kalibrierdaten für das Bildsensorsystem 16.

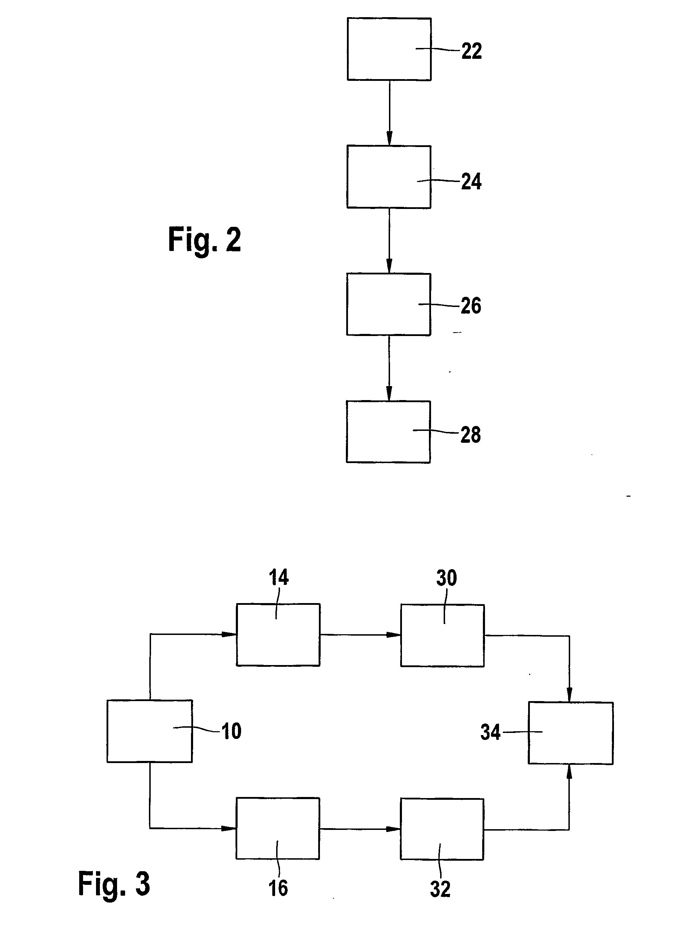

Figur 2 zeigt ein Flussdiagramm des Verfahrens zur Kalibrierung von Sensoren 14, 16. Im Block 22 wird die Ausrichtung der Sensoren 14, 16 in bezug auf das Kalibrierobjekt 10 vorgenommen. Im bevorzugten Ausführungsbeispiel geschieht dies durch Ausrichtung des Kraftfahrzeuges 12, an dem sich der Radarsensor 14 und das Bildsensorsystem 16 befinden, in bezug auf das Kalibrierobjekt 10. Alternativ ist es möglich, das Kalibrierobjekt 10 in bezug auf das Kraftfahrzeug 12 auszurichten. Im Block 24 wird die Erfassung der Bezugmerkmale 18, 20 des Kalibrierobjektes 10 durch die Sensoren 14, 16 durchgeführt. Block 26 dient zur Ermittlung der Kalibrierdaten für den Radarsensor 14 und das Bildsensorsystem 16 aus den ermittelten Daten des erfassten Kalibrierobjektes 10. Die Ermittlung der Kalibrierdaten erfolgt damit zeitgleich, d.h. die Ermittlung der Kalibrierdaten erfolgt in engem zeitlichen Zusammenhang in einem Arbeitsschritt. Als Kalibrierdaten werden beim Radarsensor 14 vorzugsweise die Richtung der Sensorachse in bezug auf die Fahrzeuglängsachse 11 und/oder die Intensität des Radarstrahles ermittelt. Zur Ermittlung der Kalibrierdaten wird bei dem Bildsensorsystem 16 das bekannte Bezugmerkmal 20 als Bild im Block 24 aufgezeichnet und im anschließenden Block 26 in einer Ausgleichsrechnung die einzelnen Parameter der Kalibrierdaten berechnet. Im bevorzugten Ausführungsbeispiel werden bei einem einzelnen Bildsensorsystem 16 als Kalibrierdaten extrinsische Parameter, vorzugsweise die geometrische Einbauposition und/oder die Richtung der Sensorachse, und/oder intrinsische Parameter, vorzugsweise der Kamerahauptpunkt und/oder die Kamerakonstante und/oder die Verzeichnung, bestimmt. Im Block 28 findet die Weiterverarbeitung der ermittelten Kalibrierdaten statt. Dabei können die Kalibrierdaten vorzugsweise durch wenigstens ein nachfolgendes System 34 gespeichert und/oder ausgewertet und/oder angezeigt und/oder übertragen und/oder weiterverarbeitet werden. Daneben werden die Kalibrierdaten in den beteiligten Sensoren 14, 16 direkt zur Kalibrierung weiter verwendet. Die Kalibrierdaten können dabei verarbeitet und/oder gespeichert werden. Das Bildsensorsystem 16 verwendet im bevorzugten Ausführungsbeispiel die Kalibrierdaten zur automatischen Korrektur der Bilder im Betrieb des Bildsensorsystems 16. Der Radarsensor 14 nutzt im bevorzugten Ausführungsbeispiel die Kalibrierdaten zur automatischen Korrektur der Abweichung der Sensorachse gegenüber der Richtung der Fahrzeuglängsachse 11. Alternativ ist es möglich die ermittelten Kalibrierdaten anzuzeigen und damit beispielsweise einem Kraftfahrzeugmechaniker die Verwendung der Kalibrierdaten zur mechanischen Verstellung des Radarsensors 14 zu ermöglichen. Diese Vorgehensweise ist während der Fertigung oder der Reparatur eines Kraftfahrzeuges 12 denkbar.

Figur 3 zeigt ein Blockdiagramm der Vorrichtung zur Kalibrierung von Sensoren 14, 16. Im bevorzugten Ausführungsbeispiel erfasst ein Radarsensor 14 und ein Bildsensorsystem 16 ein Kalibrierobjekt 10. In zwei Auswerteeinheiten 30, 32 findet die Ermittlung der Kalibrierdaten für die zwei Sensoren 14, 16 statt. In einem nachfolgenden System 34 werden die Kalibrierdaten weiterverwendet.

Das vorstehend beschriebene Verfahren und die Vorrichtung zur Kalibrierung von Sensoren 14, 16 sind nicht beschränkt auf Radarsensoren 14 und Bildsensorsysteme 16 in Kraftfahrzeugen 12. Vielmehr können Sensoren 14, 16 in Anordnungen außerhalb des Kraftfahrzeuges 12 kalibriert werden, wobei die Sensoren 14, 16 durch einen räumlichen Erfassungsbereich 15, 17 gekennzeichnet sind und bevorzugt eine Sensorachse aufweisen. Insbesondere kann das beschriebene Verfahren und die Vorrichtung bei Radarsensoren 14 und/oder Bildsensorsystemen 16 und/oder Lichtsensoren und/oder Ultraschallsensoren und/oder LIDAR-Sensoren verwendet werden. Gleichzeitig ist das Verfahren auch bei mehr als zwei Sensoren 14, 16 durchführbar. Bei mehr als zwei Sensoren 14, 16 können auch Sensoren 14, 16 des selben Sensortyps vorliegen, die dieselben Bezugmerkmale 18, 20 nutzen. Zwei mögliche Anordnung sind beispielsweise wenigstens ein Radarsensor 14 mit wenigstens zwei Bildsensorsystemen 16 oder wenigstens zwei Radarsensoren 14 mit wenigstens einem Bildsensorsystem 16, wobei die Sensoren 14, 16 vorzugsweise in einem Kraftfahrzeug 12 angeordnet sind. Bei Verwendung von wenigstens zwei Bildsensorsystemen 16 werden zusätzliche Kalibrierdaten ermittelt, welche die räumliche Position und/oder die Ausrichtung der Sensorachsen der Bildsensorsysteme 16 zueinander beinhalten.

Die Ausrichtung der Erfassungsbereiche 15, 17 der Sensoren 14, 16 ist beliebig. Zum einen können die Erfassungsbereiche 15, 17, wie im bevorzugten Ausführungsbeispiel, die Fahrzeugumgebung umfassen. Eine Ausrichtung der Erfassungsbereiche 15, 17 in das Fahrzeuginnere ist ebenfalls denkbar. Dabei ist eine beliebige gegenseitige Ausrichtung der Erfassungsbereiche 15, 17 der Sensoren 14, 16 möglich. Insbesondere ist die gleiche oder entgegengerichtete Ausrichtung der Erfassungsbereiche 15, 17 denkbar. Die Sensoren 14, 16 können sowohl innerhalb des Kraftfahrzeuges 12, als auch außerhalb angeordnet sein. Beispielsweise ist eine Befestigung der Sensoren 14, I6 im Fahrzeuginnenraum und/oder an der Stoßstange und/oder im Kofferraum und/oder im Motorraum möglich. Vorraussetzung zur Verwendung der Vorrichtung und des Verfahrens ist lediglich, dass das Kalibrierobjekt 10 durch die räumliche Anordnung der Bezugmerkmale 18, 20 an die Einbauposition und die Ausrichtung der Erfassungsbereiche 15, 17 der Sensoren 14, 16 angepasst ist.

Eine Überlappung der Erfassungsbereiche 15, 17 der Sensoren 14, 16 ist keine notwendige Vorraussetzung zur Durchführung des Verfahrens. Bei Erfassungsbereichen 15, 17 von Sensoren 14, 16, die sich nicht überlappen, muss lediglich das Kalibrierobjekt 10 so gestaltet sein, dass eine Erfassung der notwendigen Bezugmerkmale 18, 20 für jeden einzelnen Sensor 14, 16 in einem Arbeitsschritt möglich ist. Eine Erfassung des gesamten Kalibrierobjektes 10 mit allen Bezugmerkmalen 18, 20 durch jeden Sensor 14, 16 ist nicht notwendig.

Das Verfahren ist auch möglich bei bewegten Sensoren 14, 16 und/oder bei bewegtem Kalibrierobjekt 10. Beispielsweise ist im bevorzugten Ausführungsbeispiel die Vorrichtung bei bewegtem Kraftfahrzeug 12 nutzbar.

In einer Variante des beschriebenen Verfahrens wird ein Sensor 14, 16 als Referenz für einen anderen Sensor 14, 16 verwendet. Beispielsweise können die Kalibrierdaten des Radarsensors 14 aus den Messdaten des bereits kalibrierten Bildsensorsystems 16, als Referenz, und den Daten des durch den Radarsensor 14 erfassten Kalibrierobjektes 10 gebildet werden. Dabei kann die Bestimmung der räumlichen Lage des Bezugmerkmals 18, das zur Ermittlung der Kalibrierdaten des Radarsensors 14 notwendige ist, durch das Bildsensorsystem 16 durchgeführt werden. Die Bestimmung der räumlichen Lage des Bezugmerkmals 18 erfolgt indirekt über die Auswertung des Bezugmerkmals 20 mittels der bekannte räumlichen Anordnung der Bezugmerkmale 18, 20 zueinander.

In einer weiteren Variante des beschriebenen Verfahrens wird der Radarsensor 14 als Referenz für das Bildsensorsystem 16 verwendet. Dabei wird der bereits kalibrierte Radarsensor 14 zur Entfernungsmessung verwendet. Durch den Radarsensor 14 wird die Entfernung des Bezugmerkmals 18 vom Radarsensor 14 ermittelt. Die bekannte räumliche Anordnung der Bezugmerkmale 18, 20 und die ermittelte Entfernung des Bezugmerkmals 18 vom Radarsensor 14 wird vom Bildsensorsystem 16 als Referenz zur Ermittlung der Kalibrierdaten durch Auswertung des Kalibrierobjektes 10 verwendet.

Die Ermittlung der Kalibrierdaten der Sensoren 14, 16 kann wie im bevorzugten Ausführungsbeispiel durch getrennte Auswerteeinheiten 30, 32 durchgeführt werden. Alternativ ist die Ermittlung der Kalibrierdaten durch eine einzige Auswerteeinheit möglich. In einer weiteren Variante ist die Integration der Auswerteeinheiten 30, 32 mit den Sensoren 14, 16 denkbar.

In einer Variante des beschriebenen Verfahrens kann das Kalibrierobjekt 10 mittels einer mechanischen Verbindung direkt mit dem Kraftfahrzeug 12 verbunden sein. Dadurch wird die räumliche Lage des Kalibrierobjektes 10 zum Kraftfahrzeug 12 festgelegt.

Durch Verwendung eines Triple-Spiegels mit Eichmarken kann in einer weiteren Variante des beschriebenen Verfahrens die Bestimmung der Kalibrierdaten des Radarsensors 14 und des Bildsensorsystems 16 am Triple-Spiegel direkt vorgenommen werden, weil der Triple-Spiegel mit Eichmarken sowohl ein Bezugmerkmal 18 für den Radarsensor 14 aufweist, als auch ein Bezugmerkmal 20 für das Bildsensorsystem 16 hat. Damit kann sowohl der Radarsensor 14 für das Bildsensorsystem 16, als auch das Bildsensorsystem 16 für den Radarsensor 14, als Referenz zur Bestimmung der Kalibrierdaten verwendet werden. Daneben können zusätzliche Bezugmerkmale 20 für das Bildsensorsystem 16 vorhanden sein.

Durch die Anzahl der Bezugmerkmale 18, 20 für die einzelnen Sensoren 14, 16 wird die Anzahl der ermittelbaren Parameter der Kalibrierdaten festgelegt. Je mehr Bezugmerkmale 18, 20 für die einzelnen Sensoren 14, 16 vorhanden sind, desto mehr Parameter sind bestimmbar und/oder es ist eine Überbestimmung und damit eine Erhöhung der Genauigkeit zur Bestimmung der Parameter möglich.

Die Kalibrierung durch ein einziges Kalibrierobjekt 10, bei dem die räumliche Lage der Bezugmerkmale 18, 20 bekannt ist, ermöglicht die gemeinsame Nutzung der Sensoren 14, 16, da die Kalibrierdaten auf ein gemeinsames Koordinatensystem bezogen sind. Insbesondere beim Einsatz eines Radarsensors 14 und eines Bildsensorsystems 16 in einem Kraftfahrzeug 12, wie im bevorzugten Ausführungsbeispiel, können die Messdaten des Radarsensors 14 mit den Daten des Bildsensorsystems 16 kombiniert werden. Insbesondere können vorausfahrende Fahrzeuge durch beide Sensoren 14, 16 detektiert werden und die Messdaten zur redundanten, fehlervermindernden Auswertungen verwendet werden.

## Patentansprüche

1. Verfahren zur Kalibrierung von Sensoren, vorzugsweise in einem Kraftfahrzeug,
- wobei wenigstens zwei Sensoren kalibriert werden, wobei die wenigstens zwei Sensoren von unterschiedlichem Sensortyp sind, und
- wobei die Kalibrierung der Sensoren mittels eines gemeinsamen Kalibrierobjektes durchgeführt wird,
**dadurch gekennzeichnet, dass**
zur Ermittlung der Kalibrierdaten wenigstens eines der Sensoren neben den ermittelten Daten des erfassten gemeinsamen Kalibrierobjektes durch den wenigstens einen Sensor Mess-daten wenigstens eines anderen der wenigstens zwei Sensoren als Referenz verwendet werden, wobei dieser wenigstens eine Referenzsensor das erfasste gemeinsame Kalibrierobjekt verwendet.

2. Verfahren nach Anspruch 1, **dadurch gekennzeichnet, dass** in einem Arbeitsschritt Kalibrierdaten bestimmt werden.

3. Verfahren nach Anspruch 2, durch folgende Schritte **gekennzeichnet**:
- Ausrichtung der wenigstens zwei Sensoren, derart, dass das Kalibrierobjekt jeweils im Erfassungsbereich der wenigstens zwei Sensoren liegt,
- Erfassung wenigstens eines Teils des Kalibrierobjektes durch die wenigstens zwei Sensoren,
- Ermittlung der Kalibrierdaten für die wenigstens zwei Sensoren aus den ermittelten Daten des erfassten Kalibrierobjektes,

4. Verfahren nach Anspruch 2 oder 3, **dadurch gekennzeichnet, dass** die Kalibrierdaten gespeichert und/oder ausgewertet und/oder angezeigt und/oder übertragen und/oder weiterverarbeitet werden.

5. Verfahren nach einem der vorhergehenden Ansprüche, **dadurch gekennzeichnet, dass** wenigstens ein Bildsensorsystem und wenigstens ein Radarsensor verwendet wird.

6. Vorrichtung zur Durchführung des Verfahrens nach einem der vorhergehenden Ansprüche, wobei die Vorrichtung aus wenigstens zwei Sensoren, von unterschiedlichem Sensortyp wenigstens einer Auswerteeinheit und einem Kalibrierobjekt gemeinsamen besteht,
- wobei wenigstens zwei der Sensoren kalibriert werden, und
- wobei die Kalibrierung der Sensoren mittels des gemeinsamen Kalibrierobjektes durchgeführt wird,
**dadurch gekennzeichnet, dass**
zur Ermittlung der Kalibrierdaten wenigstens eines der Sensoren neben den ermittelten Daten des erfassten gemeinsamen Kalibrierobjektes durch den wenigstens einen Sensor Messdaten wenigstens eines anderen der wenigstens zwei Sensoren als Referenz verwendet werden, wobei dieser wenigstens eine Referenzsensor das erfasste gemeinsame Kalibrierobjekt verwendet.

## Claims

1. Method for calibrating sensors, preferably in a motor vehicle,
- at least two sensors being calibrated, the at least two sensors being of different sensor types, and
- the sensors being calibrated by means of a joint calibration object,
**characterized in that**,
in order to determine the calibration data for at least one of the sensors, use is made, in addition to the data determined for the joint calibration object detected by the at least one sensor, of measurement data from at least another of the at least two sensors as a reference, this at least one reference sensor using the detected joint calibration object.

2. Method according to Claim 1, **characterized in that** calibration data are determined in one work step.

3. Method according to Claim 2, **characterized by** the following steps of:
- aligning the at least two sensors in such a manner that the calibration object is respectively in the detection range of the at least two sensors,
- detecting at least part of the calibration object using the at least two sensors,
- determining the calibration data for the at least two sensors from the data determined for the detected calibration object.

4. Method according to Claim 2 or 3, **characterized in that** the calibration data are stored and/or evaluated and/or displayed and/or transmitted and/or processed further.

5. Method according to one of the preceding claims, **characterized in that** at least one image sensor system and at least one radar sensor are used.

6. Device for carrying out the method according to one of the preceding claims, the device comprising at least two sensors of different sensor types, at least one evaluation unit and a joint calibration object,
- at least two of the sensors being calibrated, and
- the sensors being calibrated by means of the joint calibration object,
**characterized in that**,
in order to determine the calibration data for at least one of the sensors, use is made, in addition to the data determined for the joint calibration object detected by the at least one sensor, of measurement data from at least another of the at least two sensors as a reference, this at least one reference sensor using the detected joint calibration object.

## Revendications

1. Procédé d'étalonnage de capteurs, de préférence dans un véhicule automobile, selon lequel
- on étalonne au moins deux capteurs d'un type différent, et
- on effectue l'étalonnage des capteurs à l'aide d'un objet d'étalonnage commun,
**caractérisé en ce que**
pour la détermination des données d'étalonnage d'un des capteurs, outre les données déterminées de l'objet d'étalonnage commun détecté par ce capteur, on utilise des données de mesure d'un autre capteur comme capteur de référence utilisant l'objet d'étalonnage commun détecté.

2. Procédé selon la revendication 1,
**caractérisé en ce que**
dans une étape de travail on détermine des données d'étalonnage.

3. Procédé selon la revendication 2,
**caractérisé par**
les étapes suivantes :
- alignement des deux capteurs pour aovir l'objet d'étalonnage respectivement dans la zone de détection des deux capteurs ,
- détection d'au moins une partie de l'objet d'étalonnage par les deux capteurs,
- détermination des données d'étalonnage des deux capteurs à partir des données déterminées de l'objet d'étalonnage détecté.

4. Procédé selon la revendication 2 ou 3,
**caractérisé en ce que**
les données d'étalonnage sont mises en mémoire et/ou exploitées et/ou indiquées et/ou transmises et/ou transformées.

5. Procédé selon l'une quelconque des revendications précédentes,
**caractérisé en ce qu'**
on utilise au moins un système de capteur d'image et au moins un capteur radar.

6. Dispositif permettant de réaliser le procédé selon l'une quelconque des revendications précédentes, omportant au moins deux capteurs d'un type différent, au moins une unité d'exploitation et un objet d'étalonnage commun, dans lequel
- au moins deux des capteurs sont étalonnés, et
- l'étalonnage des capteurs est effectué à l'aide de l'objet d'étalonnage commun,
**caractérisé en ce que**
pour la détermination des données d'étalonnage d'un des capteurs, outre les données déterminées de l'objet d'étalonnage commun détecté par ce capteur, on utilise des données de mesure d'un autre capteur pris comme capteur de référence utilisant l'objet d'étalonnage commun détecté.
